# NEUE EUROPÄISCHE PATENTSCHRIFT

(11) **EP 1 521 657 B2**
(45) Veröffentlichungstag und Bekanntmachung des Hinweises auf die Entscheidung über den Einspruch: **10.04.2013**
(45) Hinweis auf die Patenterteilung: 02.11.2006
(21) Anmeldenummer: 03762442.6
(22) Anmeldetag: 02.07.2003
(51) Int. Cl.: B22F 3/105, B22F 7/08, B22F 5/00, B23K 26/34

(54) **Verfahren zur Herstellung eines metallischen Werkstücks**
Process for making a metallic part
Procédé pour la fabrication d'une pièce metallique

(30) Priorität: 03.07.2002 DE 10229952
(43) Veröffentlichungstag der Anmeldung: 13.04.2005
(73) Patentinhaber: CL Schutzrechtsverwaltungs GmbH, 96215 Lichtenfels (DE)
(72) Erfinder: HERZOG, Frank, 96215 Lichtenfels (DE)
(74) Vertreter: Hafner, Dieter
(86) Internationale Anmeldenummer: PCT/DE2003/002206
(87) Internationale Veröffentlichungsnummer: WO 2004/004955

(56) Entgegenhaltungen:
- EP-A1- 0 734 842
- WO-A2-01/85386
- DE-A- 19 511 772
- DE-A1- 19 740 502
- DE-C- 19 925 541
- DE-U1- 29 907 262
- JP-A- 07 276 507
- US-A- 5 433 280
- US-A1- 2002 020 164
- LOHNER A. DESIGN RULES Bd. I, Nr. 97, 09 März 1998,
- 'Modular und Flexibel' LASER 2002, Seiten 42 - 45
- 'Workshop EOSINT M (D)' EOS INTERNATIONAL USER MEETING 99 26 April 1999 - 28 April 1999,
- MENNIG G.: 'Werkzeuge für die Kunststoffverarbeitung', 1995, CARL HANSER VERLAG MÜ NCHEN WIEN vol. BOGENSPERGER H. ET AL: 'Bauarten, Herstellung, Betrieb'
- 'Workshop Druckgiessen mit DirectTool' EOS INTERNATIONAL USER MEETING 2001, Seite 13
- 'Werkzeugkerne mit Laserenergie generieren' SPECIAL TOOLING Bd. 1, Nr. 02, Seiten 12 - 15
- 'Workshop C: Eosint M' EOS USER MEETING 98 Seiten 1 - 4
- TRENKE D.: 'Konstruktionsregeln für eine rapid tooling gerechte Gestaltung von Werkezugen und Prototypen' IMW - INSTITUTSMITTEILUNG Bd. 25, 2000, TU CLAUSTAHL,
- O.EDELMANN: 'LASERCUSING:eine neue Technologie im Werkzeug-und Formenbau' CONCEPT LASER GMBH 07 September 2006, Seite 12, 33
- WILHELM MEINDERS: 'Direktes Selektives Laserintern einkomponentiger metallischer Werkstoffe in Berichte aus der Lasertechnik', 1999, SHAKER VERLAG AACHEN, AACHEN, ISBN 3-8265-6571 vol. 'S.1-13, 33-41,76-77', Seiten 104 - 111
- Temperaturleitfähigkeit Gefunden im Internet: <URL:wikipedia>

## Beschreibung

Aus DE 195 11 772 C2 ist es bekannt, ein metallisches Werkstück aus einem vorgefertigten Unterteil und aus einem durch einen Metallpulversinterprozeß darauf aufgebrachten Oberteil herzustellen. Das Unterteil ist eine vorgesinterte Platte, die aus einem Material gebildet ist, an dem das Aufbaumaterial bei der Verfestigung anhaftet.

Um das bei dem bekannten Verfahren hergestellte dreidimensionale Objekt verwenden zu können, ist es erforderlich, die vorgefertigte Unterlage von dem aufgesinterten Objekt abzulösen, da die vorgefertigte Unterlage ausschließlich dazu dient, die Herstellungszeit des dreidimensionalen Objektes in der Vorrichtung zu verkürzen.

Aus US 2002/020164 A1 werden auf einem rohrartigen Körper durch Lasersintern Oberteile aufgeformt. Das Rohr kann durch konventionelle Verfahren geformt und gebildet werden.

DE-C-199 255 41 offenbart ein Dauerurformwerkzeug aus zusammengefügten metalllasergesinterten Werkzeugteilen und gegossenen und konventionell bearbeiteten Werkzeugteilen.

Um das Objekt verwenden zu können, wird die vorgefertigte Unterlage vom eigentlichen Objekt getrennt.

Aus DE19740502 ist ein Verfahren zur Herstellung von Bauteilen mit einem oberflachennahen Durchfluss und Verteilungssystem für Flüssigkeiten oder Gase, insbesondere zur Kühlung, Heizung oder Schmierung der Bauteile bekannt. Aus der Dissertation von W.Meiners "Direktes Selektives Lasersintern einkomponentiger metallischer Werkstoffe", Berichte aus der Lasertechnik, Shaker Verlag Aachen 1999, ISBN-10 3-8265-65711, ist es bekannt, ein Oberteil generatic auf ein plattenartiges Unterteil aufzubauen, wobei ein Kühlkanal Ober- und Unterteil durchsetzt. Das Unterteil wird im Falle der Verwendung des Bauteils als Werkzeug für Kern und Kavität genutzt.

Der Erfindung liegt die Aufgabe zu Grunde, ein Verfahren zur Herstellung eines metallischen Werkstückes aus einem vorgefertigten Unterteil und einem durch einen Metallpulversinter/-schmelzprozeß darauf aufgebrachten Oberteil anzugeben, das unmittelbar nach Entnahme aus dem Bauraum der Sintervorrichtung verwendbar ist.

Diese Aufgabe wird durch die gesamte Lehre des Anspruches 1 gelöst. Vorteilhafte Weiterbildungen hinsichtlich des metallischen Verfahrens ergeben sich aus den Unteransprüchen.

Als Kern der Erfindung wird es zunächst angesehen, als Unterteil ein aus einem massiven Metallstück hergestelltes, durch spanabhebende oder ähnliche Bearbeitung formgestaltetes Teilwerkstück vorzusehen, und auf dieses dann durch einen Metallpulversinter- oder - schmelzprozeß das Oberteil aufzubauen, wobei dann unmittelbar nach dem Sinter-/Schmelzprozeß das fertige Werkstück vorliegt, wobei der Kühlkanal im vorgefertigten Unterteil bereits vor dem Sintervorgang eingebracht ist und sich in der Sinterstruktur des Oberteils fortsetzt.

Derartige Werkstücke eignen sich insbesondere als Spritzwerkzeugeinsätze, die in ein Stammwerkzeug eingesetzt werden können. In der Regel sind die Unterteile derartiger Werkzeuge vereinheitlicht und weisen relativ einfache, meist zylindrische oder kubische Formen oder Formabschnitte auf. Sie sind deshalb aus einem massiven Metallblock durch spanabhebende oder ähnliche Bearbeitung ohne weiteres herstellbar, wobei als Vorteil damit einhergeht, daß derartige blockartige Unterteile hohe Festigkeiten aufweisen. Die Oberteile von Spritzwerkzeugeinsätzen hingegen sind oftmals filigran gestaltet. Sie müssen außerdem mit kompliziert verlaufenden Kühlkanälen versehen sein, die im Inneren des Oberteils bis in oftmals spitz zulaufende Werkstückbereiche verlaufen. Zur Herstellung solcher Werkstückabschnitte eignet sich das Metallpulversinterverfahren, das nun auf besonders vorteilhafte Weise erstmals mit einem vorgefertigten Teilwerkstück, nämlich dem blockartigen Unterteil kombiniert wird. Der erzielte Gesamtvorteil ist damit nicht nur in einer verkürzten Bauzeit zu sehen, sondern auch in der Möglichkeit, die Eigenschaften einzelner Werkstückabschnitte an die jeweils gegebenen Anforderungen anzupassen. Im Bereich des Werkstückunterteils müssen hohe Kräfte aufgefangen werden. Dies gelingt besonders gut mit massiven, aus dem vollen Material herausgefrästen Teilen. Oberteile mit filigranen Formen und komplex verlaufenden Kühlkanälen können mit anderen Festigkeiten, aber auch z.B. mit verbesserten Wärmeleitfähigkeitseigenschaften hergestellt werden.

Das Unterteil kann mit einer Trägerschicht versehen sein, auf die das Oberteil aufgesintert wird. Als Trägerschicht können dieselben metallischen Komponenten vorgesehen werden wie sie im Oberteil vorliegen, dadurch wird eine besonders innige Verbindung zwischen Oberteil und Unterteil erreicht.

Es ist möglich, während oder nach dem Sinterverfahren sowohl die Oberflächen des Werkstückoberteils als auch die Oberflächen des vorgefertigten Werkstückunterteils durch Abtragen oder Überschmelzen mit dem Laserstrahl zu überarbeiten. Die an das Oberteil angrenzende Oberfläche des Unterteils kann beim Sintern der ersten Pulverschicht mehr oder weniger vollständig mit aufgeschmolzen werden, so daß auch durch diese Maßnahme eine besonders innige Verbindung zwischen Oberteil und Unterteil erzielt werden kann:

Das Verfahren zur Herstellung eines metallischen Werkstücks, das aus einem vorgefertigten Unterteil und einem durch einen Metallpulversinterprozeß darauf aufgebauten Oberteil besteht, ist durch einen Ablauf der Verfahrensschritte charakterisiert, der folgendes vorsieht:

Zunächst wird das Unterteil das metallischen Werkstückes durch spanabhebende oder ähnliche Bearbeitung aus einem massiven Metallblock hergestellt, wobei die Bearbeitung eine weitgehende Endbearbeitung ist, d.h. die Grundform des Unterteils beispielsweise gefräst wird, wobei Kühlkanäle, Ausnehmungen, Halterungen und dergleichen sowie auch Ausnehmungen für eine Spannbolzenzentriereinrichtung vorgesehen werden. Dieses weitgehend fertiggestellte Unterteil wird sodann in die Baukammer einer Lasersintermaschine eingesetzt und dort reproduzierbar positioniert, was beispielsweise durch eine Spannbolzenzentriereinrichtung oder ein Tastsystem geschehen kann, die in der Lasersintereinrichtung vorgesehen sind und die mit Spannbolzen in Ausnehmungen des vorbereiteten Unterteils eingreift. Sodann werden die nach oben weisenden Bereiche des Unterteils mit Lasersintermaterial beschichtet und nachfolgend ein Sintervorgang durchgeführt, durch welchen das Sintermaterial verfestigt wird und gleichzeitig eine Verbindung mit der nach oben weisenden Oberfläche des Unterteils vollzogen wird.

In Weiterführung des Verfahrens kann vorgesehen sein, daß die nach oben weisende, mit Lasersintermaterial bedeckte Oberfläche des Unterteils bei der Durchführung der Verfestigung des Lasersintermaterials zumindest teilweise aufgeschmolzen wird. Dadurch bildet sich eine besonders feste Zwischenschicht aus. Darüberhinaus ist es möglich, die Kanten des Werkstückoberteils und/oder des Werkstückunterteils sowie auch gegebenenfalls dessen außenliegende Flächen beim Lasersintervorgang durch einen Lasersinterstrahl nochmals zu überschmelzen. Dies kann natürlich auch nach Abschluß des eigentlichen Bauvorgangs geschehen, insbesondere wenn die außenliegenden Flächen angesprochen werden.

Es ist auch möglich, einen Feinabtrag der Kanten und Flächen des Oberteils vorzunehmen, quasi die Flächen und Kanten des Werkstückes durch den Laserstrahl nochmals zu "überschlichten".

Die Erfindung ist anhand eines Ausführungsbeispieles in den Zeichnungsfiguren näher erläutert. Diese zeigen:
- Figur 1:: eine perspektivische Ansicht eines erfindungsgemäßen Werkstückes,
- Figur 2: das Werkstück in Form eines Werkzeugeinsatzes, der in ein Stamm-Spritzgießwerkzeug eingesetzt ist.

Das Werkstück 1 besteht aus einem vorgefertigten Unterteil 2 und einem durch einen Metallpulversinterprozeß darauf aufgebrachten Oberteil 3. Zwischen dem Oberteil 3 und dem Unterteil 2 ist eine Trägerschicht 4 vorgesehen, die entweder eine andere metallische Zusammensetzung als das Unterteil 2 haben kann oder eine andere Struktur aufweisen kann, da die Trägerschicht 4 z.B. durch vollständiges Aufschmelzen der Oberfläche des Unterteils hergestellt werden kann. Sowohl die Oberflächen 6 des Oberteils 3 als auch die Oberflächen 7 des Unterteils 2 können durch den Laserstrahl 8 der Lasersinteranlage überschmolzen sein.

Die Wärmeleitfähigkeit des Materials des Oberteils 3 ist höher als die des Unterteils 2, die mechanische Belastbarkeit des Unterteils 2 ist aber höher als die des Oberteils 3. Es ist aber auch möglich, das Oberteil 3 und das Unterteil 2 aus gleichem Material mit nahezu gleichen Eigenschaften herzustellen.

In dem Unterteil 2 sind durch spanabhebende Bearbeitung eingebrachte Kühl(flüssigkeits)kanäle 9 vorgesehen, die in die an das Oberteil 3 angrenzende Oberfläche des Unterteils 2 münden und sich in der Sinterstruktur des Oberteils 3 fortsetzen.

Die Übergangsbereiche 10 sowohl der Kühlkanalwandungen als auch die Übergangsbereiche 11 der außenliegenden Oberflächen 6, 7 können überschmolzen sein, um eine innige Verbindung und härtere Struktur der jeweiligen Materialbereiche zu erzielen.

An der Unterseite des Unterteils 2 sind ferner Ausnehmungen 12 zur Aufnahme einer Spannbolzenzentriereinrichtung vorgesehen.

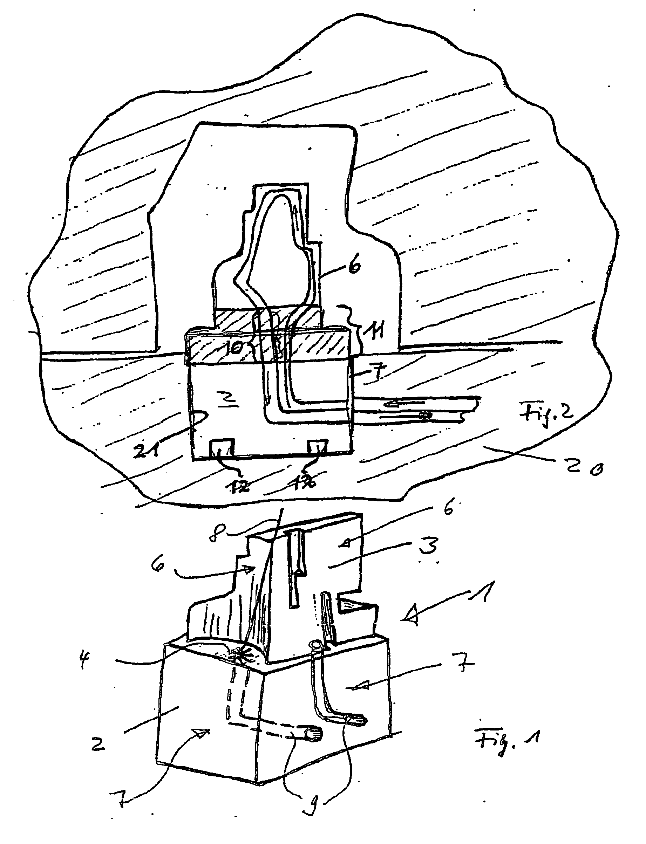

Das in den Zeichnungen Figur 1 und 2 dargestellte Werkstück 1 ist ein Werkzeugeinsatz, der in eine Ausnehmung 21 eines Stamm-Spritzgießwerkzeuges 20 eingesetzt werden kann und dort mit seinem Unterteil 2 gehalten ist. Es sind aber auch andere Einsatzbereiche des Werkstückes denkbar, beispielsweise als Prototyp-Muster, wobei das Unterteil 2 dann als formgestalteter Sockel dienen kann, als Druck- oder Presswerkzeug und dergleichen.

Vorstehend wurde die Erfindung anhand eines Werkzeugeinsatzes als Ausführungsbeispiel beschrieben. Es ist aber auch möglich, z. B. Funktionsteile aus einem Unterteil und einem aufgeschmolzenen Oberteil in erfindungsgemäßer Weise herzustellen.

## Patentansprüche

1. Verfahren zur Herstellung eines metallischen Werkstücks, (1) **gekennzeichnet durch** den Ablauf folgender Verfahrensschritte:
Vorsehen eines vorgefertigten Unterteils (2), wobei
- das Unterteil (2) aus einem massiven Metallstück **durch** spanabhebende Bearbeitung, erodierende Bearbeitung oder **durch** Laserabtrag ein formgestaltetes Teilwerkstück bildet und die Bearbeitung des Unterteils (2) das Einbringen mindestens eines Kühlkanals (9) umfasst, der **durch** spanabhebende Bearbeitung eingebracht wird,
- im folgenden Schritt auf eine Oberfläche des Unterteils (2) **durch** einen Metallpulversinter- oder Metallpulverschmelzprozess ein Oberteil (3) aufgebracht wird,
- das Unterteil (2) zusammen mit dem Oberteil (3) das gebrauchsfertige Werkstück (1) bildet,
- der mindestens eine im vorgefertigten Unterteil (2) angeordnete Kühlkanal (9) in die an das Oberteil (3) angrenzende Oberfläche mündet und sich in der Sinter- oder Schmelzstruktur des Oberteils (3) fortsetzt.

2. Verfahren nach Anspruch 1,
**dadurch gekennziechnet dass**
das Unterteil (2) dieselben metallischen Komponenten aufweist wie das Oberteil (3).

3. Verfahren nach Anspruch 1,
**dadurch gekennzeichnet, dass**
das Unterteil (2) eine Trägerschicht (4) aufweist, auf die das Oberteil (3) aufsinter- und/oder aufschmelzbar ist.

4. Verfahren nach Anspruch 3,
**dadurch gekennzeichnet, dass**
die Trägerschicht (4) dieselben metallischen Komponenten aufweist wie das Oberteil (3).

5. Verfahren nach einem der vorhergehenden Ansprüche,
**dadurch gekennzeichnet, dass**
sowohl die Oberflächen (6, 7) des Werkstückoberteils (3) als auch des Werkstückunterteils (2) durch Abtragen mit einem Laserstrahl (8) überarbeitet, insbesondere überschmolzen sind.

6. Verfahren nach einem der vorhergehenden Ansprüche,
**dadurch gekennzeichnet, dass** die Wärmeleitfähigkeit des Materials des gesinterten und/oder aufgeschmolzenen Oberteils (3) höher ist als die des Unterteils (2).

7. Verfahren nach einem der vorhergehenden Ansprüche,
**dadurch gekennzeichnet, dass**
die mechanische Belastbarkeit des Materials des Unterteils (2) höher ist als die des Oberteils (3).

8. Verfahren nach einem der vorhergehenden Ansprüche,
**dadurch gekennzeichnet, dass**
die an der Außenseite des Oberteils (3) liegenden Konturen und die innenliegenden Wandungen der Kühlkanäle (9) vollständig aufgeschmolzen oder beim Bauvorgang die gesamte zu belichtende Schicht komplett umgeschmolzen sind.

9. verfahren nach einem der vorhergehenden Ansprüche,
**dadurch gekennzeichnet, dass**
in der an das Oberteil (3) angrenzenden Oberfläche (7) des Unterteils eine oder mehrere durch den Sinterlaser vollständig aufgeschmolzen Zwischenschicht(en) erzeugt werden.

## Claims

1. Procedure for producing a metallic workpiece (1), **characterised by** the sequence of the following procedure steps:
providing a prefabricated lower portion (2),
- the lower portion (2) forming a shaped partial workpiece from a solid piece pf metal by metal-cutting machining, eroding machining or by laser erosion, and the machining of the lower portion (2) comprising the introduction of at least one cooling duct (9) which is introduced by metal-cutting machining;
- in the following step an upper portion (3) being applied to a surface of the lower portion (2) by a metal powder sintering or metal powder fusing process,
- the lower portion (2) together with the upper portion (3) forming the ready-for-use workpiece (1),
- the at least one cooling duct (9) which is arranged in the prefabricated lower portion (2) extending into the surface which adjoins the upper portion (3), and continuing in the sintered or fused structure of the upper portion (3), the transition duct walls of the lower portion (2) being fused on or fused in place by the sintering laser.

2. Procedure according to claim 1, **characterised in that** the lower portion (2) has the same metallic components as the upper portion (3).

3. Procedure according to claim 1, **characterised in that** the lower portion (2) has a carrier layer (4), onto which the upper portion (3) is sinterable and/or fusible.

4. Procedure according to claim 3, **characterised in that** the carrier layer (4) has the same metallic components as the upper portion (3).

5. Procedure according to one of the preceding claims, **characterised in that** the surfaces (6, 7) of both the upper workpiece portion (3) and the lower workpiece portion (2) are overworked, more especially surfused, by abrasion with a laser beam (8).

6. Procedure according to one of the preceding claims, **characterised in that** the thermal conductivity of the material of the sintered and/or fused-on upper portion (3) is higher than that of the lower portion (2).

7. Procedure according to one of the preceding claims, **characterised in that** the mechanical loadability of the material of the lower portion (2) is higher than that of the upper portion (3).

8. Procedure according to one of the preceding claims, **characterised in that** the contours situated on the outside of the upper portion (3) and the internally situated walls of the cooling ducts (9) are completely fused-on or, during the construction process, the entire layer to be irradiated is completely remelted.

9. Procedure according to one of the preceding claims, **characterised in that** one or more intermediate layer(s) completely fused-on by the sintering laser are produced in the surface (7) of the lower portion which adjoins the upper portion (3).

## Revendications

1. Procédé de réalisation d'une pièce usinée métallique (1),
**caractérisé par** le déroulement des étapes de procédé suivantes :
Prévision d'une partie inférieure (2) préfabriquée, sachant que
- la partie inférieure (2) constitue une pièce partiellement usinée mise en forme à partir d'une pièce métallique massive, venue d'usinage par enlèvement de copeaux, par érosion, ou produite par abrasion au laser et l'usinage de la partie inférieure (2) comprend l'aménagement d'au moins un canal de refroidissement (9), qui est aménagé par usinage par enlèvement de copeaux ;
- dans l'étape suivante une partie supérieure (3) est déposée sur la surface de la partie inférieure (2) par un procédé de frittage d'une poudre métallique ou un procédé de fusion d'une poudre métallique,
- la partie inférieure (2) forme avec la partie supérieure (3) la pièce usinée (1) achevée,
- ledit au moins un canal de refroidissement (9), déposé dans la partie inférieure (2) préfabriquée, débouche dans la surface limitrophe de la partie supérieure (3) et se prolonge(nt) dans la structure de la partie supérieure (3) venue de frittage ou de fusion, les parois du canal ou des canaux de transition de la partie inférieure (2) fusionnées sur ou rapportées par le laser de frittage.

2. Procédé selon la revendication 1,
**caractérisé par le fait**
**que** la partie inférieure (2) possède les mêmes composants métalliques que la partie supérieure (3).

3. Procédé selon la revendication 1,
**caractérisé par le fait**
**que** la partie inférieure (2) présente une couche de substrat (4) sur laquelle la partie supérieure (3) peut être rapportée par frittage et/ou par fusion.

4. Procédé selon la revendication 3,
**caractérisé par le fait**
**que** la couche de substrat (4) possède les mêmes composants métalliques que la partie supérieure (3).

5. Procédé selon l'une des revendications précédentes,
**caractérisé par le fait**
**que** les surfaces (6, 7) tant de la partie supérieure (3), que de la partie inférieure (2) de ladite pièce, sont retouchées par abrasion à l'aide d'un rayon laser (8), notamment couvertes d'une couche fusée.

6. Procédé selon l'une des revendications précédentes,
**caractérisé par le fait**
**que** la conductivité thermique du matériau de la partie supérieure (3), venue de frittage et/ou de fusion, est plus élevée que celle de la partie inférieure (2).

7. Procédé (1) selon l'une des revendications précédentes,
**caractérisé par le fait**
**que** la résistance aux efforts mécaniques du matériau de la partie inférieure (2) est plus élevée que celle de la partie supérieure (3).

8. Procédé selon l'une des revendications précédentes,
**caractérisé par le fait**
**que** les profils situés à la face extérieure de la partie supérieure (3), et les paroi$ intérieures des canaux de refroidissement (9), sont intégralement rapportés par fusion, ou bien l'intégralité de la couche à illuminer est totalement noyée par fusion lors du processus de façonnage.

9. Procédé selon l'une des revendications précédentes,
**caractérisé par le fait**
**que** la surface (7) de la partie inférieure qui est limitrophe de la partie supérieure (3) comprend une ou plusieurs couche(s) intermédiaire(s) intégralement rapportée(s) par fusion au moyen du laser de frittage.
